# EUROPÄISCHE PATENTSCHRIFT

(11) **EP 4 087 966 B1**
(45) Veröffentlichungstag und Bekanntmachung des Hinweises auf die Patenterteilung: **11.03.2026**
(21) Anmeldenummer: 20820389.3
(22) Anmeldetag: 04.12.2020
(51) Int. Cl.: D04H 1/4374, B32B 5/02, B32B 5/26, D04H 1/492, D04H 1/498, D04H 18/04

(54) **ANLAGE UND VERFAHREN ZUR HERSTELLUNG EINES EIN- ODER MEHRLAGIGEN VLIESES**
SYSTEM AND METHOD FOR PRODUCING A SINGLE- OR MULTI-LAYER NONWOVEN
INSTALLATION ET PROCÉDÉ DE FABRICATION D'UN NON-TISSÉ MONOCOUCHE OU MULTICOUCHE

(30) Priorität: 10.01.2020 DE 102020100424; 01.09.2020 DE 102020122864
(43) Veröffentlichungstag der Anmeldung: 16.11.2022
(73) Patentinhaber: Trützschler Group SE, 41199 Mönchengladbach (DE); Voith Patent GmbH, 89522 Heidenheim (DE)
(72) Erfinder: WEIGERT, Thomas, 65843 Sulzbach (DE); SEILS, Florian, 63500 Seligenstadt (DE); PÖHLER, Kai, 52391 Vettweiss (DE)
(86) Internationale Anmeldenummer: PCT/EP2020/084680
(87) Internationale Veröffentlichungsnummer: WO 2021/139933

(56) Entgegenhaltungen:
- EP-A1- 3 118 361
- EP-A1- 3 550 062
- EP-B1- 1 929 080
- WO-A1-2013/067557
- WO-A1-2019/243109
- DE-A1- 102015 112 955
- DE-A1- 102016 217 401
- US-A1- 2013 157 537

## Beschreibung

Die Erfindung betrifft ein Verfahren zur Herstellung eines mehrlagigen Vlieses, sowie ein nach diesem Verfahren hergestelltes Vlies.

Es ist durch die EP 1929080 B1 bekannt, lose Fasern mit einem Vlies zu verbinden, in dem die losen Fasern immer durch ein Band von unten gestützt und geführt werden und dabei gleichzeitig auf einem Vlies abgelegt werden. Dieses Verfahren und die dazugehörige Anlage sind sehr aufwändig, da eine absolut parallele Führung der Bänder über einen längeren Abschnitt erforderlich ist. Dies ist konstruktiv sehr aufwändig umzusetzen, da zwischen den Bändern eine konstante Spannung erforderlich ist und beide Bänder an jeder Stelle eine identische Geschwindigkeit aufweisen müssen, um keine unkontrollierten Verzüge in das Endprodukt zu bringen.

Die DE 102015112955 A1 löst das oben genannte Problem dadurch, dass die Schicht aus losen Fasern auf einem Vlies abgelegt wird.

Die EP 3118361 A1 offenbart eine Krempelanlage, die in Materialtransportrichtung vor der Anlage zur Herstellung nassgelegter Fasern angeordnet ist.

Die WO2013/067557 A1 und die EP 3550062 A1 offenbaren die Herstellung von einem nassgelegten Faserstoff aus Pulp mit lösungsmittelgesponnenen Cellulosefasern.

Die US2013/0157537 offenbart eine Schicht nassgelegter Pulpfasern, die mit einem Vlies aus regenerierter Cellulosefasern mittels Wasserstrahlen verbunden werden. Das Vlies wird unter die Schicht der nassgelegten Pulpfasern in die Anlage eingebracht, so dass bei der Wasserstahlverfestigung von der Oberseite der Pulpfasern eine hohe Ausschwemmung von Fasern erfolgt.

Die DE 102016217401 A1 offenbart einen Schrägsiebformer, von dem eine Bahn aus nassgelegtem Faserstoff kopfüber mittels eines Übergabesiebes auf ein umlaufendes Band übergeben wird. Aus einer Zuführeinrichtung kann ein weiteres Vlies unter der Bahn aus nassgelegtem Faserstoff auf das umlaufende Band eingeführt werden.

Bei Wetlaid-Produkten ist die Zugfestigkeit oft unzureichend, so dass die Verwendung bei Hygieneartikeln nur eingeschränkt möglich ist. Eine Kombination aus hoher Flüssigkeitsaufnahme und erhöhter Zugfestigkeit ist wünschenswert und erhöht den Einsatzbereich.

Aufgabe der vorliegenden Erfindung ist es, ein Verfahren zur Herstellung eines mehrlagigen Vlieses zu schaffen, mit dem nassgelegte Fasern mit mindestens einem Krempelvlies zusammen zu einem Vlies hoher Festigkeit verarbeitet werden können. Weiterhin ist es Aufgabe der Erfindung ein Vlies aus einem nassgelegten Faserstoff mit einer hohen Festigkeit bei gleichzeitig guter Flüssigkeitsaufnahme herzustellen.

Die Erfindung löst die gestellte Aufgabe durch die Lehren nach Anspruch 1 und 3; weitere vorteilhafte Ausgestaltungsmerkmale der Erfindung sind durch die Unteransprüche gekennzeichnet.

Das erfindungsgemäße Verfahren zum Herstellen eines mehrlagigen Vlieses sieht vor, eine Bahn von nassgelegtem Faserstoff und/oder ein Vlies und/oder ein Krempelvlies auf einem umlaufenden Band abzulegen und dieses in Kombination mit einem der vorgenannten Bahnen aus Faserstoff oder Vliese als zwei- bis dreilagiges Vlies einer Wasserstrahlverfestigung zum Verbinden und/oder Verfestigen und/oder Strukturieren zuzuführen und anschließend zu trocknen. Die Ablage der Bahn aus Faserstoff und deren mögliche Kombination mit einem weiteren Krempelvlies ist so gestaltet, dass kein Verzug auf die einzelne Bahn oder auf die mehrlagige Bahn ausgeübt wird. Dies setzt eine höhere Festigkeit des Faserstoffes voraus, was dadurch erreicht wird, indem der nassgelegte Faserstoff, der üblicherweise aus Pulp besteht, mit einem Anteil von 30 Gew.-% - 5 Gew.-% Iösungsmittelgesponnene Cellulosefasern, beispielsweise mit Lyocell, kombiniert oder gemischt wird. Die Kombination der nassgelegten Pulpfasern mit den lösungsmittelgesponnenen Cellulosefasern, beispielsweise aus Lyocell, erhöht die Nassfestigkeit des Faserstoffes um über 60 %, da überraschenderweise die Fibrillen der lösungsmittelgesponnenen Cellulosefasern eine hohe Bindung mit den kurzen Pulpfasern eingehen. Die erhöhte Nassfestigkeit des Faserstoffes ermöglicht eine Weiterverarbeitung in der Anlage, ohne den Faserstoff zu kammern oder durch ein zweites Band zu führen. Im Gegensatz zu Materialkombinationen aus dem Stand der Technik können lösungsmittelgesponnene Cellulosefasern als Kurzschnittfasern ebenfalls eine kürzere Faserlänge aufweisen, als diese üblicherweise verwendet wird. Die durchschnittliche Faserlänge der lösungsmittelgesponnenen Cellulosefasern von 8 bis 12 mm bei einem Titer von 1,2 bis 1,8 dtex hat sich als ideal für die Verwendung in einem Wetlaid-Prozess herausgestellt. Durch die hohe Bindungsfähigkeit der lösungsmittelgesponnenen Cellulosefasern mit dem Pulp wird die Pulpbelastung der Filtration der Anlage verringert, was den Nutzeffekt der Anlage und des Verfahrens erhöht. Das erfindungsgemäße Verfahren hat den Vorteil, dass sehr leichte Faserstoffe von beispielsweise 25 g/m² und weniger herstellbar sind, die eine hohe Festigkeit aufweisen und damit ohne Beschädigung von einem Transportband zum nächsten übergeben werden können.

Die Wasserstrahlverfestigung ist ausgebildet, mehrere Schichten von Fasern oder mehrere Vliese miteinander zu verfestigen, zu verbinden und/oder zu strukturieren. Vorzugsweise sind die Wasserbalken der Wasserstrahlverfestigung ausgebildet, das Wasser mit einem Druck von 40 bis 400 bar auf die Faserbahn zu spritzen. Mittels speziell ausgebildeter Düsenanordnung oder in Kombination mit einem oberen Strukturband, mit dem die Bahn aus Faserstoff gekammert wird, ist eine Strukturierung und damit mustergebende Oberfläche des Vlieses möglich. Alternativ kann die Verfestigung und Strukturierung auch auf einer nicht dargestellten Trommel mit einer aufgezogenen Strukturschale erfolgen, die vor dem Trockner angeordnet ist.

Es ergibt sich eine sehr flexible Anlage, bei der verschiedene Fasern mit unterschiedlichen Faserlängen in unterschiedlichen Flächengewichten eingeleitet und einzeln oder zusammen verarbeitet werden können. Die Anordnung von einem Schrägsiebformer und einer in Materialtransportrichtung nachfolgend angeordneter Krempel ist platzsparend und aufgrund der Führung des Transportbandes unterhalb der Krempel leicht und preiswert umzusetzen. Ein Teil des Transportbandes kann beispielsweise abgedeckt Unterflur angeordnet werden.

Das erfindungsgemäße Vlies umfasst einen nassgelegten Faserstoff, der zu 70 Gew.-% - 95 Gew.-% aus Pulp und 30 Gew.-% - 5 Gew.-% aus lösungsmittelgesponnenen Cellulosefasern, beispielsweise Lyocell, besteht. Die Kombination der nassgelegten Pulpfasern mit den lösungsmittelgesponnene Cellulosefasern erhöht die Nassfestigkeit des Vlieses um über 60 %, da überraschenderweise die Fibrillen der lösungsmittelgesponnenen Cellulosefasern eine hohe Bindung mit den kurzen Pulpfasern eingehen. Dabei wird durch die Wasseraufnahmefähigkeit der lösungsmittelgesponnenen Cellulosefasern eine ideale Kombination mit dem Pulp geschaffen, um als mittlere oder untere Schicht für Hygieneprodukte oder Windeln eine hohe Flüssigkeitsaufnahme zu ermöglichen. Im Gegensatz zu Materialkombinationen aus dem Stand der Technik weisen die lösungsmittelgesponnenen Cellulosefasern ebenfalls eine kürzere Faserlänge auf, als diese üblicherweise verwendet wird. Die durchschnittliche Faserlänge der lösungsmittelgesponnenen Cellulosefasern, beispielweise Lyocell, von 8 bis 12 mm bei einem Titer von 1,3 bis 1,8 dtex hat sich als ideal für die Verwendung in einem Wetlaid-Prozess herausgestellt. Durch die hohe Bindungsfähigkeit der lösungsmittelgesponnenen Cellulosefasern mit dem Pulp wird die Pulpbelastung der Filtration der Anlage verringert, was den Nutzeffekt der Anlage und des Verfahrens erhöht.

Dabei wird der nassgelegte Faserstoff mit einer oder zwei Lagen aus einem weiteren Vlies verbunden, die den nassgelegten Faserstoff als Deckschichten kammern. Dabei ist zumindest ein Vlies als Krempelvlies ausgebildet, das aus 100 Gew.-% lösungsmittelgesponnene Cellulosefasern, oder 100 Gew.-% Viskose oder zu 100 Gew.-% aus einer Mischung aus lösungsmittelgesponnenen Cellulosefasern und Viskose besteht. Das zweite Vlies besteht ebenfalls aus 100 Gew.-% lösungsmittelgesponnene Cellulosefasern, oder 100 Gew.-% Viskose oder zu 100 Gew.-% aus einer Mischung aus lösungsmittelgesponnene Cellulosefasern und Viskose. Die lösungsmittelgesponnene Cellulosefasern weisen vorzugsweise eine durchschnittliche Faserlänge von 38 - 40 mm mit einem Titer von 1,2 - 1,8 dtex auf, wodurch sie sich von den lösungsmittelgesponnenen Cellulosefasern, die im Wetlaidverfahren verwendet werden, unterscheiden. Die Viskosefasern weisen ebenfalls vorzugsweise eine durchschnittliche Faserlänge von 38 - 40 mm mit einem Titer von 1,2 - 1,8 dtex auf. Ein weiterer Vorteil bei der Kombination des zuvor beschriebenen Faserstoffes 9 mit einem Krempelvlies 15a aus lösungsmittelgesponnene Cellulosefasern liegt in der vollständigen biologischen Abbaubarkeit des entstehenden Hygieneproduktes. Für den Betreiber der Anlage kann je nach Verfügbarkeit und Weltmarktpreis von Viskose und/oder Lyocell, Tencel, Cocel, etc. bei ähnlichen Eigenschaften eine Kostenoptimierung betrieben werden, indem die hergestellten Vliese, die als Deckschicht den Faserstoff kammern, nur aus lösungsmittelgesponnenen Cellulosefasern, oder nur aus Viskose, oder aus einer Mischung von beiden bestehen kann.

Weitere, die Erfindung verbessernde Maßnahmen werden nachstehend gemeinsam mit der Beschreibung eines bevorzugten Ausführungsbeispiels der Erfindung anhand der Figuren näher dargestellt.

Es zeigen:
- Fig.1:: zeigt eine erste Ausführungsform der Anlage und des erfindungsgemäßen Verfahrens;
- Fig. 2:: zeigt eine zweite Ausführungsform der Anlage und des erfindungsgemäßen Verfahrens.

Die Anlage 100 umfasst zumindest einen Schrägsiebformer 1, mindestens eine in Transportrichtung der Warenbahn nachgeordnete Vorrichtung zur Einführung einer weiteren Warenbahn, mindestens eine nachfolgend angeordnete Wasserstrahlverfestigung mit mindestens einem Wasserbalken 16 und einen Trockner 18.

Ein Schrägsiebformer 1 ist unterhalb eines umlaufenden Siebbandes 10 angeordnet. Das Siebband 10, das als endloses Band ausgeführt sein kann, läuft um verschiedene Walzen 12 herum und weist einen schrägen Abschnitt 11 auf, der in Laufrichtung des Siebbandes um einen Winkel ansteigt. Im Bereich des schrägen Abschnittes 11 ist unterhalb des Siebbandes 10 der Schrägsiebformer 1 angeordnet, auf dessen Belag 2 sich das Siebband 10 abstützt. Unterhalb des Belages 2 ist mindestens eine Saugzone 3 angeordnet, die mittels nicht dargestellter Pumpen unter Unterdruck gesetzt wird. Der Schrägsiebformer 1 kann mehrere Saugzonen 3 aufweisen, die mit unterschiedlichen Drücken bzw. Unterdrücken beaufschlagt werden. Die Unterdruckquellen können vorzugsweise als steuer-/regelbare Vakuumpumpen ausgeführt werden.

In diesem Ausführungsbeispiel werden über einen Stoffauflauf 8 mindestens eine Fasersuspensionen auf das Siebband 10 gegeben. Die Fasersuspension enthält neben Wasser einen bestimmten Gehalt an Feststoff, der wiederum aus Fasern und aus anderen Zuschlagstoffen besteht. Bei mehreren Fasersuspensionen sind zwischen ihnen nicht dargestellte Lamellen angeordnet, mit denen die Schichtdicke der Fasersuspensionen einzeln oder in Summe variiert werden kann. Da die Lamellen die Fasersuspensionen voneinander separieren, werden diese nacheinander auf dem Schrägsiebformer 1 entwässert. Damit wird eine Vermischung der Fasersuspensionen verhindert und die Lagenreinheit der einzelnen Schichten Faserstoff verbessert. Über die mindestens eine Saugzone in Verbindung mit den steuer-/regelbaren Vakuumpumpen kann jede Schicht einer Fasersuspension einem separaten Unterdruck ausgesetzt werden, womit unterschiedliche Mischungen von Wasser mit Fasern in jeder Fasersuspension verarbeitet werden kann.

Die Faserstoffsuspension besteht in diesem Ausführungsbeispiel aus Pulp mit einem Anteil von 5 Gew.-% bis 30 Gew.-% Lyocell. Der Pulp weist eine durchschnittliche Faserlänge von 1 - 3 mm mit einem Titer von 1,1 - 1,8 dtex auf. Das Lyocell weist eine durchschnittliche Faserlänge von 8 - 12 mm mit einem Titer von 1,2 - 1,8 dtex auf. Im Vergleich zum Stand der Technik kann über die Lyocell-Beimischung die Zugfestigkeit des Faserstoffes 9 erhöht werden. Ein weiterer Vorteil ist die sinkende Pulpbelastung der Filtration. Dies liegt überraschenderweise weniger in der Reduzierung des Pulpanteils bei gleichem Flächengewicht, sondern an der Bindungswirkung zwischen den Lyocell-Fasern und dem Pulp. Im Gegensatz zu Viskosefasern weisen Lyocellfasern Fibrillen auf, mit denen die kurzen Pulpfasern in der wässrigen Lösung gebunden bzw. gehalten werden.

Bei einem Versuch betrug die Zugfestigkeit bei 100 Gew.-% Pulp bei einem Flächengewicht von 25g/m² in Querrichtung (CD) 12 N/5cm. Alle hier angegebenen Festigkeitswerte beziehen sich auf eine Prüfung nach EDANA WSP 110.4 (09). Bei einer Fasermischung von 90 Gew.-% Pulp und 10 Gew.-% Lyocell, erhöhte sich die Festigkeit im Mittel auf 14N/5cm, maximal auf bis zu 16 N/5cm. Bei einer Fasermischung von 80 Gew.-% Pulp und 20 Gew.-% Lyocell steigerte sich die Festigkeit im Mittel auf 18 N/5cm, maximal sogar auf bis zu 20 N/5cm. Die Erhöhung der Mischung ist vorteilhafterweise bei 70 Gew.-% Pulp mit 30 Gew.-% Lyocell beschränkt, da der Faserstoff 9 dann nicht mehr die notwendige Aufnahmefähigkeit für Flüssigkeit hat, die bei einer Verwendung als Windeleinlage oder Hygieneartikel notwendig ist. Das Flächengewicht der trockenen Bahn aus Faserstoff 9 kann vorzugsweise 10 bis 60 g/m² betragen. Statt des Lyocell kann auch eine andere lösungsmittelgesponnene Cellulosefaser, beispielsweise Tencel, verwendet werden.

Das Siebband 10, das durchlässig für Flüssigkeiten und Gase ist, transportiert die Fasersuspension über den schrägen Abschnitt 11 über den Schrägsiebformer 1. Aufgrund der Schwerkraft und des Unterdruckes, der auf die Fasersuspension wirkt, wird die Fasersuspensionen entwässert, wodurch sich in diesem Beispiel eine Bahn aus Faserstoff 9 mit einer Lage Fasern bildet. Unterhalb der Saugzone 3 wird das Siebwasser 6 in einem Siebkasten 5 gesammelt und abgezogen. Die Bahn aus Faserstoff 9 wird in Pfeilrichtung erst über einen horizontalen Abschnitt dann weiter über einen schräg abfallenden Abschnitt auf dem Band 10 transportiert. Nach dem schräg abfallenden Abschnitt wird die Bahn aus Faserstoff 9 mit seiner Unterseite auf ein weiteres umlaufendes Band 13 übergeben, das als Endlosband um mindestens zwei Walzen 14 läuft.

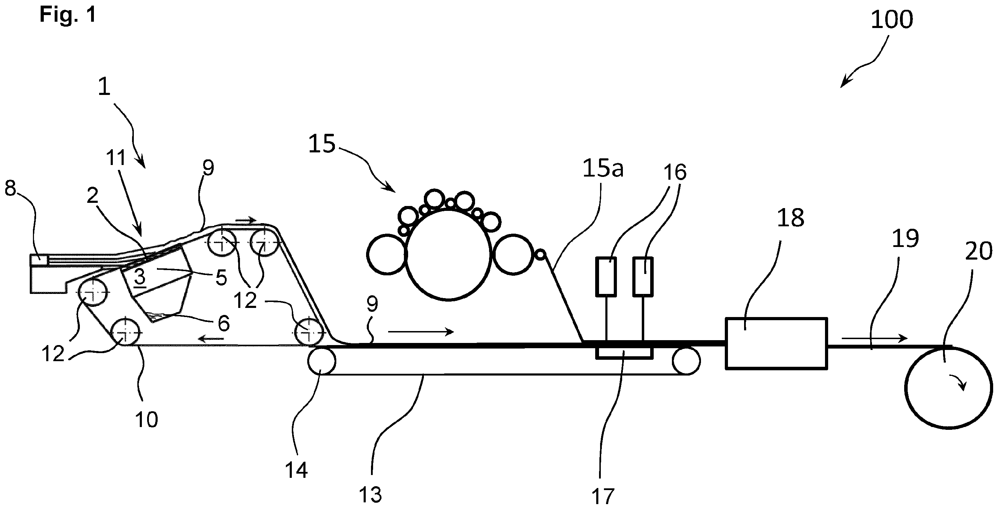

In Transportrichtung der Bahn aus Faserstoff 9 ist im ersten Ausführungsbeispiel der Figur 1 eine Krempel 15 in der Anlage 100 angeordnet. Die Krempel 15 ist räumlich oberhalb des Bandes 13 angeordnet, so dass die nassgelegte Bahn aus Faserstoff 9 unabhängig von der Krempel 15 zu einer Wasserstrahlverfestigung mit mindestens einem Wasserbalken 16 und einer unter dem Band 13 angeordneten Absaugung 17 geführt werden kann. Oder anders ausgedrückt, das Band 13 wird unterhalb der ortsfest installierten Krempel 15 geführt und ist ausgebildet, die Bahn aus Faserstoff 9 direkt vom Schrägsiebformer zur Wasserstrahlverfestigung zu leiten. Dabei wird der Faserstoff 9 miteinander verfestigt, im Trockner 18 getrocknet und ggfs. in einer Wickelstation 20 aufgewickelt wird.

Die Krempel 15 kann eine kardierte Warenbahn aus Fasern, ein Krempelvlies 15a, in die Anlage 100 einführen. Dies erfolgt vor der Wasserstrahlverfestigung, so dass mittels der Wasserbalken 16 eine Verbindung der Bahn aus Faserstoff 9 mit dem Krempelvlies 15a erfolgt. Die Bahn aus Faserstoff 9 kann mit einer Decklage aus einem Krempelvlies 15a zu einem mehrlagigen Vlies 19 durch die Wasserstrahlverfestigung verbunden und im Trockner 18 getrocknet und ggfs. in einer Wickelstation aufgewickelt. Üblicherweise kann das Krempelvlies 15a beispielsweise aus Polyester, Viskose, einer Baumwollmischung oder einer Mischung aus synthetischen und/oder natürlichen Fasern bestehen. Vorzugsweise beträgt das Flächengewicht des Krempelvlieses 15a 20g/m² bis 60g/m².

Vorteilhafterweise besteht das Krempelvlies aus 100 Gew.-% Viskose, oder aus 100 Gew.-% lösungsmittelgesponnener Cellulosefaser, beispielsweise aus Lyocell oder Tencel, oder zu 100 Gew.-% aus einer Mischung aus beiden Fasern. Der Vorteil dieser verwendbaren Materialien als Deckschicht für den Faserstoff 9 liegt in der hohen Saugfähigkeit und der weichen Griffigkeit (soft denim) bei der Verwendung als Hygieneartikel. Ein weiterer Vorteil bei der Kombination des zuvor beschriebenen Faserstoffes 9 mit einem Krempelvlies 15a aus lösungsmittelgesponnenen Cellulosefasern liegt in der vollständigen biologischen Abbaubarkeit des entstehenden Hygieneproduktes. Für den Betreiber der Anlage kann je nach Verfügbarkeit und Weltmarktpreis von Viskose und/oder Lyocell, Tencel, etc. bei ähnlichen Eigenschaften eine Kostenoptimierung betrieben werden, indem das kardierte Vlies 15a nur aus lösungsmittelgesponnenen Cellulosefasern, oder nur aus Viskose, oder aus einer Mischung von beiden bestehen kann. Die hier verwendeten Lyocellfasern weisen vorzugsweise eine durchschnittliche Faserlänge von 38 - 40 mm mit einem Titer von 1,2 - 1,8 dtex auf. Die Viskosefasern weisen ebenfalls vorzugsweise eine durchschnittliche Faserlänge von 38 - 40 mm mit einem Titer von 1,2 - 1,8 dtex auf.

Das Krempelvlies weist vorzugsweise ein Flächengewicht von 20g/m² auf, so dass das verfestigte und getrocknete Vlies 19 ein Flächengewicht von vorzugsweise 45g/m² aufweist.

Nach diesem Ausführungsbeispiel ist die Anlage ausgebildet, wahlweise die Bahn aus Faserstoff 9 oder das Krempelvlies 15a oder die Bahn aus Faserstoff 9 zusammen mit dem Krempelvlies 15a zu verarbeiten. Vorzugsweise wird ein zweilagiges Vlies mit einem Gewicht von 45g/m² erzeugt, bei dem die Lage aus Faserbahn 9 aus 70 Gew.-% - 95 Gew.-% Pulp und 30 Gew.-% - 5 Gew.-% lösungsmittelgesponnenen Cellulosefasern besteht. Die zweite Lage aus Krempelvlies 15a kann aus 100 Gew.-% lösungsmittelgesponnenen Cellulosefasern, aus 100 Gew.-% Viskose, oder zu 100 Gew.-% aus einer Mischung aus lösungsmittelgesponnenen Cellulosefasern mit Viskose bestehen.

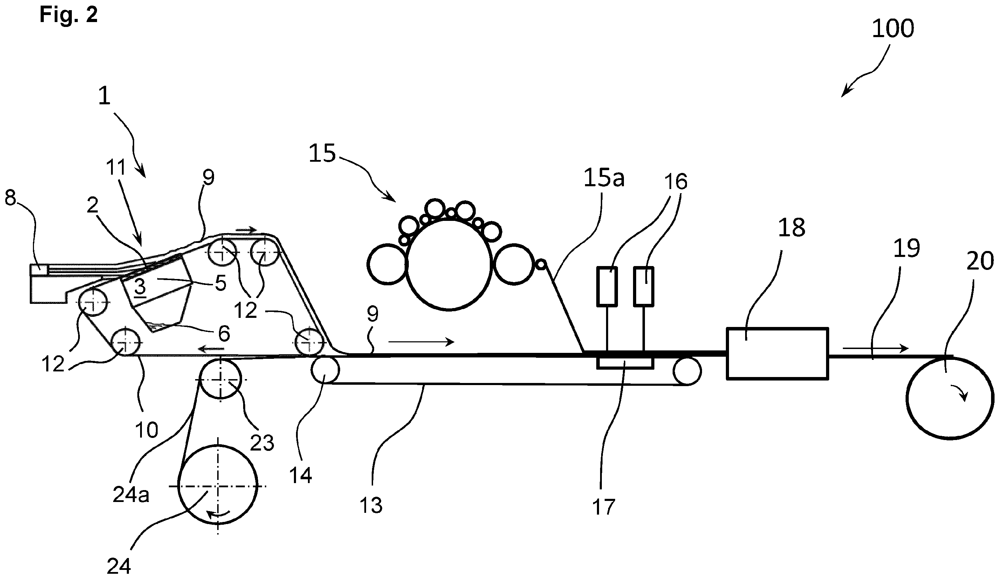

In dem Ausführungsbeispiel der Figur 2 ist im Vergleich zum Ausführungsbeispiel der Figur 1 zusätzlich eine Abwickelstation 24 mit einer Walze 23 in Transportrichtung der Bahn aus Faserstoff 9 vor dem Band 13 angeordnet. Die Abwickelstation 24 kann vor dem Schrägsiebformer 1 oder unterhalb (Unterflur) von diesem angeordnet sein und kann alternativ oder ergänzend zum Kardenvlies 15a eine Warenbahn aus Fasern als Vlies 24a in die Anlage 100 einführen. Statt der Abwickelstation 24 kann vor dem Schrägsiebformer 1 auch eine weitere Krempel angeordnet sein, deren Krempelvlies unter dem Schrägsiebformer 1 in die Anlage 100 eingeführt wird.

Entgegen der schematischen Darstellung der Anordnung der Abwickelstation 24 und der Laufrichtung des Bandes 10 in der Figur 2 in diesem Ausführungsbeispiel ist die Abwickelstation 24 so angeordnet sein, dass das Vlies 24a zwischen der Ablage der Bahn aus Faserstoff 9 und der Walze 14 auf das Band 13 abgelegt wird. Damit ist ein dreilagiges Vlies 19 möglich, wobei das Vlies 24a und das Krempelvlies 15a die Decklagen für die Bahn aus Faserstoff 9 bilden. Vorzugsweise besteht das Krempelvlies 24a ebenfalls aus 100 Gew.-% Viskose, oder aus 100 Gew.-% lösungsmittelgesponnene Cellulosefasern, oder zu 100 Gew.-% aus einer Mischung aus beiden Fasern. Die lösungsmittelgesponnenen Cellulosefasern weisen vorzugsweise eine durchschnittliche Faserlänge von 38 - 40 mm mit einem Titer von 1,2 - 1,8 dtex auf. Die Viskosefasern weisen ebenfalls vorzugsweise eine durchschnittliche Faserlänge von 38 - 40 mm mit einem Titer von 1,2 - 1,8 dtex auf.

Das Krempelvlies weist vorzugsweise ein Flächengewicht von 20g/m² auf, so dass das verfestigte und getrocknete dreilagige Vlies 19 ein Flächengewicht von vorzugsweise 65g/m² aufweist.

Wird das Vlies 24a als Alternative zur Bahn aus Faserstoff 9 in die Anlage 100 eingespeist, kann auch ein Vlies aus Tissue bzw. Papier verwendet werden. Vorzugsweise beträgt das Flächengewicht des Vlieses 24a dann 10 g/m² bis 60g/m².

Nach diesem Ausführungsbeispiel der Figur 2 ist die Anlage ausgebildet, ein zwei oder dreilagiges Vlies 19 herzustellen, das aus der Bahn aus Faserstoff 9 mit einem Krempelvlies 15a auf der Oberseite und ggfs. einem Krempelvlies 24a auf der Unterseite bestehen kann. Die Anlage 100 ist dabei so konfiguriert, dass keine Überlappung oder ein paralleles Laufen von Bändern vorhanden ist, zwischen denen aufgrund Geschwindigkeitsunterschied ein Verzug des Vlieses möglich ist.

### Bezugszeichen

- 100: Anlage

- 1: Schrägsiebformer
- 2: Belag
- 3: Saugzone
- 5: Saugkasten
- 6: Siebwasser
- 8: Stoffauflauf
- 9: Faserstoff
- 10: Siebband
- 11: schräger Abschnitt
- 12: Walze
- 13: Band
- 14: Walze
- 15: Krempel
- 15a: Krempelvlies
- 16: Wasserbalken
- 17: Absaugung
- 18: Trockner
- 19: Vlies

- 23: Walze
- 24: Abwickelstation
- 24a: Vlies

## Patentansprüche

1. Verfahren zum Herstellen eines zweilagigen oder dreilagigen Vlieses (19), bei dem eine Bahn von nassgelegtem Faserstoff (9) in einem Schrägsiebformer (1) hergestellt wird und mit einem Krempelvlies (15a), das aus einer in Materialtransportrichtung nachfolgend angeordneten Krempel (15) hergestellt wird, und/oder einem Vlies (24a), dass vor oder unterhalb des Schrägsiebformers (1) mittels einer Abwickelstation (24) oder einer weitere Krempel in die Anlage eingeführt wird, als zwei- bis dreilagiges Vlies (19) einer Wasserstrahlverfestigung zum Verbinden und/oder Verfestigen und/oder Strukturieren zugeführt und anschließend getrocknet wird, wobei die Bahn von nassgelegtem Faserstoff (9) mittels eines Bandes (13) transportiert wird, das unterhalb der ortsfest installierten Krempel (15) geführt wird und ausgebildet ist, die Bahn aus Faserstoff (9) direkt vom Schrägsiebformer (1) zu der Wasserstrahlverfestigung zu leiten, wobei der Faserstoff (9) aus 70 Gew.-% - 95 Gew.-% Pulp und 30 Gew.-% - 5 Gew.-% lösungsmittelgesponnenen Cellulosefasern besteht, vorzugsweise aus 80 Gew.-% Pulp und 20 Gew.-% lösungsmittelgesponnene Cellulosefasern, besonders bevorzugt aus 90 Gew.-% Pulp und 10 Gew.-% lösungsmittelgesponnene Cellulosefasern, **dadurch gekennzeichnet, dass** das Krempelvlies (15a) und das Vlies (24a) aus 100 Gew.-% lösungsmittelgesponnenen Cellulosefasern, oder 100 Gew.-% Viskose oder zu 100 Gew.-% aus einer Mischung aus lösungsmittelgesponnenen Cellulosefasern und Viskose besteht.

2. Verfahren nach einem der Ansprüche 1, **dadurch gekennzeichnet, dass** die Wasserstrahlverfestigung ausgebildet ist, bei einem Druck von 40 bar bis 400 bar den Faserstoff (9) mit einem oder beiden Vliesen (15a, 24a) zu verfestigen, zu verbinden und/oder zu strukturieren.

3. Vlies, hergestellt nach einem Verfahren der Ansprüche 1 bis 2, umfassend einen nassgelegten Faserstoff (9) aus 70 Gew.-% - 95 Gew.-% Pulp und 30 Gew.-% - 5 Gew.-% lösungsmittelgesponnene Cellulosefasern, **dadurch gekennzeichnet, dass** der nassgelegte Faserstoff (9) mit mindestens einer Deckschicht aus 100 Gew.-% lösungsmittelgesponnene Cellulosefasern, oder aus 100 Gew.-% Viskose oder zu 100 Gew.-% aus einer Mischung aus lösungsmittelgesponnenen Cellulosefasern und Viskose verbunden wird.

4. Vlies nach Anspruch 3, **dadurch gekennzeichnet, dass** der nassgelegte Faserstoff (9) aus 80 Gew.-% Pulp und 20 Gew.-% lösungsmittelgesponnene Cellulosefasern besteht und eine Festigkeit von mindestens 18 N/5cm in Querrichtung (CD) aufweist.

5. Vlies nach einem der Ansprüche 3 bis 4, **dadurch gekennzeichnet, dass** der nassgelegte Faserstoff (9) aus 90 Gew.-% Pulp und 10 Gew.-% lösungsmittelgesponnene Cellulosefasern besteht und eine Festigkeit von mindestens 16 N/5cm in Querrichtung (CD) aufweist.

6. Vlies nach einem der Ansprüche 3 bis 5, **dadurch gekennzeichnet, dass** der Pulp eine durchschnittliche Faserlänge von 1 - 3 mm aufweist mit einem Titer von 1,1 - 1,8 dtex.

7. Vlies nach einem der Ansprüche 3 bis 5, **dadurch gekennzeichnet, dass** die lösungsmittelgesponnenen Cellulosefasern eine durchschnittliche Faserlänge von 8 - 12 mm mit einem Titer von 1,2 - 1,8 dtex aufweist.

8. Vlies nach Anspruch 3, **dadurch gekennzeichnet, dass** die Fasern aus lösungsmittelgesponnenen Cellulosefasern oder Viskose eine durchschnittliche Faserlänge von 38 - 40 mm mit einem Titer von 1,2 - 1,8 dtex aufweisen.

9. Vlies nach Anspruch 8, **dadurch gekennzeichnet, dass** die Deckschicht bzw. die Deckschichten als Krempelvlies (15a) und/oder Vlies (24a) ausgebildet sind.

## Claims

1. Method for producing a two-ply or three-ply nonwoven (19), in which a sheet of wet-laid fibre material (9) is produced in an inclined wire former (1) and which is supplied together with a roller card web (15a), which is produced by a roller card (15) arranged downstream in material transport direction, and/or a web (24a), which is introduced into the installation upstream or downstream of the inclined wire former (1) via an unwinding station (24) or a further roller card, in the form of a two- to three-ply nonwoven (19) to a hydroentanglement for bonding and/or entangling and/or structuring and is subsequently dried, wherein the sheet of wet-laid fibre material (9) is transported by means of a belt (13), which is guided below the stationary roller card (15) and is designed to guide the sheet of fibre material (9) directly from the inclined wire former (1) to the hydroentanglement, wherein the fibre material (9) consists of from 70% by weight to 95% by weight pulp and from 30% by weight to 5% by weight solvent-spun cellulose fibres, preferably of 80% by weight pulp and 20% by weight solvent-spun cellulose fibres, particularly preferably of 90% by weight pulp and 10% by weight solvent-spun cellulose fibres, **characterized in that** the roller card web (15a) and the web (24a) consists of 100% by weight solvent-spun cellulose fibres, or 100% by weight viscose, or 100% by weight of a mixture of solvent-spun cellulose fibres and viscose.

2. Method according to any one of claims 1, **characterised in that** the hydroentanglement is configured to entangle, bond and/or structure the fibre material (9) with one or both webs (15a, 24a) at a pressure of from 40 bar to 400 bar.

3. Nonwoven, produced according to a method according to claim 1 or 2, comprising a wet-laid fibre material (9) of from 70% by weight to 95% by weight pulp and from 30% by weight to 5% by weight solvent-spun cellulose fibres, **characterised in that** the wet-laid fibre material (9) is bonded with at least one cover layer of 100% by weight solvent-spun cellulose fibres, or of 100% by weight viscose, or of 100% by weight of a mixture of solvent-spun cellulose fibres and viscose.

4. Nonwoven according to claim 3, **characterised in that** the wet-laid fibre material (9) consists of 80% by weight pulp and 20% by weight solvent-spun cellulose fibres and has a strength of at least 18 N/5 cm in the cross-machine direction (CD).

5. Nonwoven according to one of claims 3 to 4, **characterised in that** the wet-laid fibre material (9) consists of 90% by weight pulp and 10% by weight solvent-spun cellulose fibres and has a strength of at least 16 N/5 cm in the cross-machine direction (CD).

6. Nonwoven according to any one of claims 3 to 5, **characterised in that** the pulp has an average fibre length of from 1 to 3 mm with a titre of from 1.1 to 1.8 dtex.

7. Nonwoven according to any one of claims 3 to 5, **characterised in that** the solvent-spun cellulose fibres have an average fibre length of from 8 to 12 mm with a titre of from 1.2 to 1.8 dtex.

8. Nonwoven according to claim 3, **characterised in that** the fibres of solvent-spun cellulose fibres or viscose have an average fibre length of from 38 to 40 mm with a titre of from 1.2 to 1.8 dtex.

9. Nonwoven according to claim 8, **characterised in that** the cover layer or cover layers is/are in the form of a roller card web (15a) and/or web (24a).

## Revendications

1. Procédé de fabrication d'un voile (19) à deux ou trois couches dans lequel un lé de matière fibreuse (9) déposée par voie humide est fabriqué dans un façonneur à toile oblique (1) et est amené avec un voile de carde (15a), qui est fabriqué sur une carde à rouleaux (15) disposée en aval dans le sens du transport de matière, et/ou un voile (24a), qui est introduit dans l'installation avant ou sous le façonneur à toile oblique (1) au moyen d'une station de déroulement (24) ou d'une autre carde à rouleaux, sous forme d'un voile (19) à deux ou trois couches à un dispositif de consolidation à jet d'eau pour être relié et/ou consolidé et/ou structuré, puis séché, dans lequel le lé de matière fibreuse (9) déposée par voie humide est transporté au moyen d'une bande (13) qui est guidée sous la carde à rouleaux (15), installée de manière fixe, et conçue pour diriger le lé de matière fibreuse (9) directement du façonneur à toile oblique (1) au dispositif de consolidation à jet d'eau, dans lequel la matière fibreuse (9) est composée de 70 % à 95 % en poids de pulpe et de 30 % à 5 % en poids de fibres de cellulose filées à l'aide d'un solvant, de préférence de 80 % en poids de pulpe et de 20 % en poids de fibres de cellulose filées à l'aide d'un solvant, de façon particulièrement préférée de 90 % en poids de pulpe et de 10 % en poids de fibres de cellulose filées à l'aide d'un solvant, **caractérisé en ce que** le voile de carde (15a) et le voile (24a) sont composés de 100 % en poids de fibres de cellulose filées à l'aide d'un solvant ou de 100 % en poids de viscose ou de 100 % en poids d'un mélange de fibres de cellulose filées à l'aide d'un solvant et de viscose.

2. Procédé selon l'une des revendications 1, **caractérisé en ce que** le dispositif de consolidation à jet d'eau est conçu pour consolider, relier et/ou structurer la matière fibreuse (9) avec un ou deux voiles (15a, 24a) à une pression de 40 bars à 400 bars.

3. Voile fabriqué selon l'un des procédés des revendications 1 à 2, comportant une matière fibreuse (9) déposée par voie humide composée de 70 % à 95 % en poids de pulpe et de 30 % à 5 % en poids de fibres de cellulose filées à l'aide d'un solvant, **caractérisé en ce que** la matière fibreuse (9) déposée par voie humide est reliée avec au moins une couche supérieure composée de 100 % en poids de fibres de cellulose filées à l'aide d'un solvant ou de 100 % en poids de viscose ou de 100 % en poids d'un mélange de fibres de cellulose filées à l'aide d'un solvant et de viscose.

4. Voile selon la revendication 3, **caractérisé en ce que** la matière fibreuse (9) déposée par voie humide est composée de 80 % en poids de pulpe et de 20 % en poids de fibres de cellulose filées à l'aide d'un solvant et présente une résistance d'au moins 18 N/5 cm dans le sens transversal (CD).

5. Voile selon l'une des revendications 3 à 4, **caractérisé en ce que** la matière fibreuse (9) déposée par voie humide est composée de 90 % en poids de pulpe et de 10 % en poids de fibres de cellulose filées à l'aide d'un solvant et présente une résistance d'au moins 16 N/5 cm dans le sens transversal (CD).

6. Voile selon l'une des revendications 3 à 5, **caractérisé en ce que** la pulpe présente une longueur de fibres moyenne de 1 - 3 mm avec un titre de 1,1 - 1,8 dtex.

7. Voile selon l'une des revendications 3 à 5, **caractérisé en ce que** les fibres de cellulose filées à l'aide d'un solvant présentent une longueur de fibres moyenne de 8 - 12 mm avec un titre de 1,2 - 1,8 dtex.

8. Voile selon la revendication 3, **caractérisé en ce que** les fibres composées de fibres de cellulose filées à l'aide d'un solvant ou de viscose présentent une longueur de fibres moyenne de 38 - 40 mm avec un titre de 1,2 - 1,8 dtex.

9. Voile selon la revendication 8, **caractérisé en ce que** la couche supérieure ou les couches supérieures sont conçues comme voile de carde (15a) et/ou voile (24a).
